# EUROPEAN PATENT SPECIFICATION

(11) **EP 2 845 492 B1**
(45) Date of publication and mention of the grant of the patent: **11.04.2018**
(21) Application number: 14183422.6
(22) Date of filing: 03.09.2014
(51) Int. Cl.: A23G 1/22, A23G 3/02, A23P 30/10, B29C 33/40

(54) **Mold for food**
Form für Lebensmittel
Moule pour aliments

(30) Priority: 05.09.2013 KR 20130106815; 14.07.2014 KR 20140088608
(43) Date of publication of application: 11.03.2015
(73) Proprietor: Lotte Advanced Materials Co., Ltd., Jeollanam-do (KR)
(72) Inventor: Lee, Young Bae, Gyeonggi-do (KR); Kim, Jae Kyung, Gyeonggi-do (KR)
(74) Representative: Michalski Hüttermann & Partner Patentanwälte mbB

(56) References cited:
- WO-A1-2006/026823
- DE-B- 1 283 661
- FR-A1- 2 908 778
- GB-A- 697 071
- GB-A- 2 342 271
- US-A1- 2005 042 340

## Description

### Field of the Invention

The present invention relates to a forming mold, and more particularly, to a mold for food.

### Description of the Related Art

Thermoplastic resins exhibit excellent physical properties such as low specific gravity, good moldability, and good impact resistance, as compared with glass or metal. With the trend of producing low cost, larger and lighter weight molding articles, plastic products made of thermoplastic resins are quickly replacing existing glass and metallic products.

Among the thermoplastic resins, a polycarbonate resin is a representative thermoplastic material having a heat deformation temperature of 135°C or more and is widely used in various fields due to excellent dimensional stability and heat resistance thereof.

A thermoplastic resin composition including a polycarbonate resin and the like is also used for molding articles, such as chocolate molds and the like. When a product is manufactured using such a mold, the product is separated from the mold by applying impact and/or heat to the mold. However, although the thermoplastic resin used in the mold can exhibit excellent mechanical properties such as impact resistance, heat resistance and the like, the product can contain mold fragments (pieces generated due to breakage of the thermoplastic resin composition) and the like since the mold can be broken by impact or heat during separation of the product from the mold. In particular, when the product is a food, since the mold fragments contained in the food can provide a harmful influence on persons, the mold fragments must be removed from the food.

Therefore, it is necessary to develop a mold for food, which does not generate such mold fragments through sufficient improvement in properties of the thermoplastic resin composition, such as impact resistance, heat resistance and the like, and can allow detection and removal of the mold fragments even when such mold fragments are formed.

Mold trays are inter alia disclosed in the US 2005/04240 and WO 2006/02823.

### Summary of the Invention

It is an aspect of the present invention to provide a mold for food, which can allow detection of mold fragments based on magnetic properties through introduction of a magnetic material and can exhibit excellent impact resistance, heat resistance and processability.

One aspect of the present invention relates to a mold for food. The mold for food includes: a thermoplastic resin; a magnetic material; and an impact modifier.

In one embodiment, the thermoplastic resin may include at least one of polycarbonate, aromatic vinyl, polyester, polyphenylene ether, polyamide, and polyolefin resins.

In one embodiment, the magnetic material may include at least one of strontium-ferrite (Sr-Fe₁₂O₁₉), barium-ferrite (Ba-Fe₁₂O₁₉), magnetite (Fe₃O₄), maghemite (γ-Fe₂O₃), nickel-ferrite (Ni-Fe₂O₄), and cobalt-ferrite (Co-Fe₂O₄).

In one embodiment, the magnetic material may have a saturation magnetization of 40 emu/g or more. The impact modifier may includes at least one of a core-shell graft impact modifier and a branched graft impact modifier.

In one embodiment, the core-shell graft impact modifier may be prepared by grafting an aromatic vinyl monomer and at least one monomer copolymerizable with the aromatic vinyl monomer to a rubbery polymer core.

In one embodiment, the branched graft impact modifier may include at least one of methyl methacrylate-butadiene-styrene (MBS), styrene-butadiene-styrene (SBS), styrene-butadiene rubber (SBR), ethylene-propylene rubber (EPM, EPR), ethylene-propylene-diene monomer (EPDM) terpolymer, maleic anhydride-grafted EPDM (EPR-g-MA), maleic anhydride-grafted SBS (SBS-g-MA), maleic anhydride-grafted EPDM (EPDM-g-MA), ethylene methyl acrylate (EMA), ethylene ethyl acrylate (EEA), ethylene vinyl alcohol (EVOH), thermoplastic elastomers, and thermoplastic plastomers.

In one embodiment, the mold for food may include: 100 parts by weight of the thermoplastic resin; 3 or more parts by weight to 20 or less parts by weight of the magnetic material; and 1.5 or more parts by weight to 10 or less parts by weight of the impact modifier.

In one embodiment, the mold for food may have a saturation magnetization of 1 emu/g or more, as measured on a specimen having a size of 4 mm × 4 mm × 2.5 mm.

In one embodiment, the mold for food may have an Izod impact strength from 50 or more kgf·cm/cm to 90 kgf·cm/cm or less, as measured on an 1/8" thick specimen in accordance with ASTM D256.

In one embodiment, the mold for food may have a melt flow index (MI) from 5 or more g/10 min to 15 g/10 min or less, as measured at 220°C under a load of 10 kgf in accordance with ASTM D1238.

In one embodiment, the mold for food may include a recess and a frame surrounding the recess.

In one embodiment, the frame may have a width and a length which each independently range from 10 cm or more to 200 cm or less, and the recess may have a thickness from 2 cm or more to 50 cm or less.

### Brief description of the Drawings

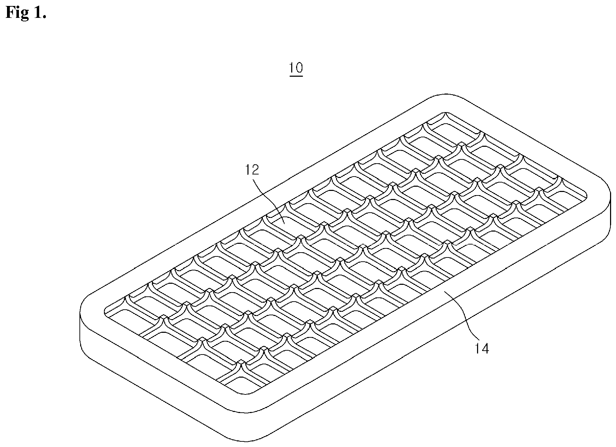

Fig. 1 is a perspective view of a mold for food according to one embodiment of the present invention.

### Detailed description of the Invention

Hereinafter, embodiments of the present invention will be described in detail with reference to the accompanying drawings.

According to the present invention, a mold for food includes (A) a thermoplastic resin, (B) a magnetic material, and (C) an impact modifier, as defined in claim 1.

### (A) Thermoplastic resin

According to the present invention, the (A) thermoplastic resin may be any typical thermoplastic resin without limitation. For example, the thermoplastic resin may include polycarbonate resins, aromatic vinyl resins, polyester resins, polyphenylene ether resins, polyamide resins, polyolefin resins, and the like. These resins may be used alone or in combination thereof. Specifically, a polycarbonate resin and an aromatic vinyl resin may be used alone or in combination thereof.

In one embodiment, the polycarbonate resin may be any typical thermoplastic polycarbonate resin without limitation. For example, the polycarbonate resin may be an aromatic polycarbonate resin prepared by reacting one or more diphenols represented by Formula 1 with phosgene, halogen formate, or carbonic acid diester. 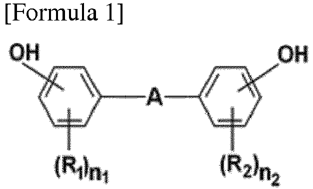 wherein A is selected from the group consisting of a single bond, a substituted or unsubstituted C₁ to C₅ alkylene group, a substituted or unsubstituted C₂ to C₅ alkylidene group, a substituted or unsubstituted C₃ to C₆ cycloalkylene group, a substituted or unsubstituted C₅ to C₆ cycloalkylidene group, -CO-, -S-, and -SO₂-; R₁ and R₂ are each independently a substituted or unsubstituted C₁ to C₃₀ alkyl group or a substituted or unsubstituted C₆ to C₃₀ aryl group; and n₁ and n₂ are each independently an integer from 0 to 4.

As used herein, the term "substituted" means that a hydrogen atom is substituted with a substituent, such as a C₁ to C₃₀ alkyl group, a C₁ to C₃₀ haloalkyl group, a C₆ to C₃₀ aryl group, a C₂ to C₃₀ heteroaryl group, a C₁ to C₂₀ alkoxy group, combinations thereof, and the like. As used herein, the term "hetero" refers to one or more of N, O, S, and/or P atoms, in place of a carbon atom.

Examples of diphenols may include 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, and the like. For example, the diphenols may include 2,2-bis(4-hydroxyphenyl)propane, 2,2-bis(3,5-dichloro-4-hydroxyphenyl)propane, 1,1-bis(4-hydroxyphenyl)cyclohexane, and the like. Specifically, the diphenols may include 2,2-bis(4-hydroxyphenyl)propane, which is also referred to as bisphenol-A.

The polycarbonate resin may be a branched polycarbonate resin and may also be prepared by reacting one or more diphenols with 0.05 mol% or more to 2 mol% or less of a polyfunctional compound containing tri- or higher functional groups, for example, tri or higher-valent phenol groups, based on the total amount of diphenols used in polymerization.

The polycarbonate resin may be used in the form of a homo-polycarbonate resin, a co-polycarbonate resin, or blends thereof.

In addition, the polycarbonate resin may be partially or completely replaced by an aromatic polyester-carbonate resin obtained by polymerization in the presence of an ester precursor, for example, a bifunctional carboxylic acid.

The polycarbonate resin may have a weight average molecular weight (Mw) from 10,000 g/mol or more to 200,000 g/mol or less, for example, 15,000 g/mol or more to 80,000 or less, without being limited thereto.

The polycarbonate resin may have a melt flow index (MI) from 5 g/lOmin or more to 50 g/lOmin or less, for example, from 10 g/lOmin or more to 40 g/lOmin or less, as measured at 300°C under a load of 1.2 kg in accordance with ISO 1133. The polycarbonate resin may be a mixture of at least two polycarbonate resins having different melt flow indices.

In one embodiment, the aromatic vinyl resin may be a polymer of one or more aromatic vinyl monomers (an aromatic vinyl polymer resin), or a copolymer of an aromatic vinyl monomer and another monomer copolymerizable with the aromatic vinyl monomer (an aromatic vinyl copolymer).

Examples of the aromatic vinyl monomer may include styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene, and the like, without being limited thereto. Specifically, the aromatic vinyl monomer may include styrene.

In addition, examples of the monomer copolymerizable with the aromatic vinyl monomer may include an unsaturated nitrile compound, such as acrylonitrile, methacrylonitrile, ethacrylonitrile, and the like, acrylic acid, methacrylic acid, maleic anhydride, and N-substituted maleimide, without being limited thereto. These monomers may be used alone or in combination thereof.

In the aromatic vinyl copolymer, the aromatic vinyl monomer may be present in an amount of 50 wt% or more to 95 wt% or less, for example, 60 wt% or more to 90 wt% or less, specifically 70 or more wt% to 80 wt% or less, based on the total weight of the aromatic vinyl copolymer. Within this range, the mold for food can exhibit excellent impact strength.

Examples of the aromatic vinyl resin may include polystyrene (PS), high-impact polystyrene (HIPS), a styrene-acrylonitrile copolymer (SAN), an acrylonitrile-styrene-acrylate copolymer (ASA), and the like. These resins may be used alone or in combination thereof.

A method for preparing the aromatic vinyl resin is well known to those skilled in the art, and the resin can be commercially obtained. For example, the aromatic vinyl resin may be polymerized by thermal polymerization without an initiator, or may be polymerized in the presence of the initiator. The polymerization initiator may include at least one of peroxide initiators such as benzoyl peroxide, t-butyl hydroperoxide, acetyl peroxide, cumene hydroperoxide, and the like, and azo initiators such as azobisisobutyronitrile, without being limited thereto.

The aromatic vinyl resin may be prepared by mass polymerization, suspension polymerization, emulsion polymerization, or combinations thereof. For example, mass polymerization can be used.

The aromatic vinyl resin may have a weight average molecular weight of 10,000 g/mol or more to 500,000 g/mol or less as measured by gel permeation chromatography (GPC), without being limited thereto.

When the (A) thermoplastic resin according to the present invention is a mixture of the polycarbonate resin and the aromatic vinyl resin, the polycarbonate resin may be present in an amount of 10 wt% or more to 99 wt% or less, for example, 20 wt% or more to 85 wt% or less, and the aromatic vinyl resin may be present in an amount of 1 wt% or more to 90 wt% or less, for example, 15 wt% or more to 80 wt% or less, based on the total weight (100 wt%) of the mixture.

In some embodiments, the mixture of the polycarbonate resin and the aromatic vinyl resin may include the polycarbonate resin in an amount of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, or 99 wt%. Further, according to some embodiments of the present invention, the amount of polycarbonate resin can be in a range from about any of the foregoing amounts to about any other of the foregoing amounts.

In some embodiments, the mixture of the polycarbonate resin and the aromatic vinyl resin may include the aromatic vinyl resin in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, or 90 wt%. Further, according to some embodiments of the present invention, the amount of aromatic vinyl resin can be in a range from about any of the foregoing amounts to about any other of the foregoing amounts.

Within this range, the mold for food can exhibit excellent properties in terms of impact strength, processability, heat resistance, and the like.

### (B) Magnetic material

According to the present invention, the magnetic material is included in the mold for food such that the mold and fragments thereof can be detected in response to magnetism. The magnetic material is a material capable of being magnetized by a magnetic field. For example, the magnetic material may include: transition metals such as iron, manganese, chromium, nickel, cobalt, zinc, and the like; transition metal compounds such as oxides, sulfides, phosphides and alloys thereof, oxides, sulfides and phosphides of alloys thereof, and the like; and compositions including these materials. Examples of the magnetic material may include strontium-ferrite (Sr-Fe₁₂O₁₉), barium-ferrite (Ba-Fe₁₂O₁₉), magnetite (Fe₃O₄), maghemite (γ-Fe₂O₃), nickel-ferrite (Ni-Fe₂O₄), cobalt-ferrite (Co-Fe₂O₄), mixtures thereof, and the like. More specifically, the magnetic material may be magnetite (Fe₃O₄).

In one embodiment, the magnetic material may have various forms, such as particles, powders and the like, and may have an average size (particle diameter, and the like) from 1 nm or more to 1,500 nm or less, for example, from 200 nm to or more 1,000 nm or less, specifically from 500 nm or more to 900 nm or less, more specifically of 500 nm, 550 nm, 600 nm, 650 nm, 700 nm, 750 nm, 800 nm, 850 nm, or 900 nm. Within this range, the magnetic material can be uniformly dispersed in the mold, and a specimen (fragment) of the mold for food having a size of a few millimeters or less can be detected by a magnetic detector.

In one embodiment, the magnetic material may have a magnetic intensity (saturation magnetization, Ms) of 40 emu/g or more, for example, from 40 emu/g or more to 100 emu/g or less. Within this range, a specimen (fragment) of the mold for food having a size of a few millimeters or less can be detected by a magnetic detector.

In one embodiment, the magnetic material may be present in an amount of 3 parts or more by weight to 20 parts by weight or less, for example, 5 parts or more by weight to 10 parts by weight or less, specifically of 5 parts by weight, 6 parts by weight, 7 parts by weight, 8 parts by weight, 9 parts by weight, or 10 parts by weight, based on 100 parts by weight of the thermoplastic resin. In some embodiments, the magnetic material may be present in an amount of about 3, 4, 5, 6, 7, 8, 9, 10, 11, 12, 13, 14, 15, 16, 17, 18, 19, or 20 parts by weight. Further, according to some embodiments of the present invention, the amount of magnetic material can be in a range from about any of the foregoing amounts to about any other of the foregoing amounts. Within this range, the mold for food and fragments thereof can be detected by a magnetic detector, and the mold for food can exhibit excellent properties in terms of impact resistance, heat resistance, processability and the like, and have good balance therebetween.

### (C) Impact modifier

According to the present invention, the impact modifier includes a core-shell graft impact modifier, a branched graft impact modifier, or mixtures thereof.
According to the present invention, the term "impact modifier" especially means and/or includes a material added to a substance during manufacture to improve resistance to deformation or breaking.

In one embodiment, the core-shell graft impact modifier may be obtained by grafting an aromatic vinyl monomer and an unsaturated compound including at least one monomer copolymerizable with the aromatic vinyl monomer to a rubbery polymer core.

Examples of the rubbery polymer (core) may include: diene rubbers such as polybutadiene, poly(styrene-butadiene), poly(acrylonitrile-butadiene), and the like; acrylic rubbers such as saturated rubbers obtained by adding hydrogen to the diene rubbers, isoprene rubbers, and poly(butyl acrylate); ethylene-propylene-diene monomer (EPDM) terpolymer, and the like. Among these materials, the rubbery polymer is preferably a diene rubber, more preferably a butadiene rubber. The rubbery polymer may be present in an amount of 5 wt% or more to 65 wt% or less, for example, 10 wt% or more to 60 wt% or less, specifically 20 wt% or more to 50 wt% or less, based on the total weight of the core-shell graft impact modifier (core-shell graft copolymer). Within this range, the mold for food can exhibit excellent impact strength. The rubbery polymer (rubbery particles) may have an average (z-average) particle size from 0.05 µm or more to 6 µm or less, for example, from 0.15 µm or more to 4 µm or less, specifically form 0.25 or more µm to 3.5 µm or less. Within this range, the mold for food can exhibit excellent impact strength and appearance.

The aromatic vinyl monomer may be an aromatic vinyl monomer capable of being
grafted to the rubbery copolymer. Examples of the aromatic vinyl monomer capable of being grafted to the rubbery copolymer may include styrene, α-methylstyrene, β-methylstyrene, p-methylstyrene, p-t-butylstyrene, ethylstyrene, vinylxylene, monochlorostyrene, dichlorostyrene, dibromostyrene, and vinyl naphthalene, without being limited thereto. Specifically, the aromatic vinyl monomer is styrene.

Examples of the monomer copolymerizable with the aromatic vinyl monomer may include an unsaturated nitrile compound such as acrylonitrile, methacrylonitrile, ethacrylonitrile and the like, acrylic acid, methacrylic acid, maleic anhydride, N-substituted maleimide, and the like, without being limited thereto. These monomers may be used alone or in combination thereof.

The unsaturated compound may be present in an amount of 35 wt% or more to 95 wt% or less, for example, 40 wt% or more to 90 wt% or less, specifically 50 wt% or more to 80 wt% or less, based on the total weight of the core-shell graft impact modifier. In addition, when the unsaturated compound is a mixture of the aromatic vinyl monomer and the monomer copolymerizable with the aromatic vinyl monomer, the aromatic vinyl monomer may be present in an amount of 50 wt% or more to 95 wt% or less, for example, 60 wt% or more to 90 wt% or less, and the monomer copolymerizable with the aromatic vinyl monomer may be present in an amount of 5 wt% or more to 50 wt% or less, for example, 10 wt% or more to 40 wt% or less, based on the total weight of the unsaturated compound. Within this range, the mold for food can exhibit excellent impact strength.

Examples of the core-shell graft impact modifier may include a copolymer (g-ABS) in which a styrene monomer corresponding to an aromatic vinyl compound and an acrylonitrile monomer corresponding to an unsaturated nitrile compound are grafted to a core butadiene rubbery polymer and thus form a shell, without being limited thereto.

In one embodiment, the branched graft impact modifier may include methyl methacrylate-butadiene-styrene (MBS), styrene-butadiene-styrene (SBS), styrene-butadiene rubber (SBR), ethylene-propylene rubber (EPM, EPR), ethylene-propylene-diene monomer (EPDM) terpolymer, maleic anhydride-grafted EPR (EPR-g-MA), maleic anhydride-grafted SBS (SBS-g-MA), maleic anhydride-grafted EPDM (EPDM-g-MA), ethylene methyl acrylate (EMA), ethylene ethyl acrylate (EEA), ethylene vinyl alcohol (EVOH), thermoplastic elastomers, thermoplastic plastomers, mixtures thereof, and the like. For example, the branched graft impact modifier may include methyl methacrylate-butadiene-styrene (MBS), styrene-butadiene-styrene (SBS), styrene-butadiene rubber (SBR), and the like.

In one embodiment, the impact modifier may be present in an amount of 1.5 parts or more by weight to 10 parts by weight or less, for example, 1.5 parts or more by weight to 2 parts by weight or less, specifically of 1.5 parts by weight, 1.6 parts by weight, 1.7 parts by weight, 1.8 parts by weight, 1.9 parts by weight, or 2.0 parts by weight, based on 100 parts by weight of the thermoplastic resin. In some embodiments, the impact modifier may be present in an amount of 1.5, 2, 2.5, 3, 3.5, 4, 4.5, 5, 5.5, 6, 6.5, 7, 7.5, 8, 8.5, 9, 9.5, or 10 parts by weight. Further, according to some embodiments of the present invention, the amount of impact modifier can be in a range from about any of the foregoing amounts to about any other of the foregoing amounts. Within this range, the mold for food can exhibit excellent properties in terms of impact resistance, heat resistance, processability and the like, and have good balance therebetween.

According to the present invention, the mold for food may further include typical additives, as needed. The additives include flame retardants, antioxidants, nucleating agents, surfactants, coupling agents, fillers, plasticizers, lubricants, antimicrobials, release agents, heat stabilizers, photo stabilizers, compatibilizers, inorganic additives, colorants, stabilizers, antistatic agents, pigments, dyes, and flame-proofing agents, without being limited thereto. These additives may be used alone or in combination thereof.

When the additives are used, the additives may be present in an amount of 0.01 parts or more by weight to 40 parts or less by weight based on 100 parts by weight of the thermoplastic resin, without being limited thereto.

In one embodiment, the mold for food may be prepared through various molding methods, such as injection molding, extrusion, vacuum molding, casting, and the like, using a thermoplastic resin composition prepared in pellet form by mixing the above components with other additives, followed by melt extrusion in an extruder. The molding methods are well known to those skilled in the art.

Fig. 1 is a perspective view of a mold for food according to one embodiment of the present invention. As shown in Fig. 1, according to the present invention, a mold for food 10 may include a recess (design portion) 12; and a frame 14 surrounding the recess. The recess 12 can accommodate fluid type food such as liquid chocolates and the like, and allows a desired shape to be transferred to the food. The mold may have a plurality of recesses 12. In one embodiment, a fluid type food such as liquid chocolate and the like is poured into the recess (design portion) 12, followed by curing, thereby preparing a food such as recess-shaped solid chocolates and the like. For example, the frame 14 (mold for food 10) may have a width and a length which each independently range from 10 cm to 200 cm, without being limited thereto. In addition, the recess (design portion) 12 may have a size and a shape, which vary with shapes of food to be prepared, and may have a thickness (depth of the recess) from 2 cm to 50 cm, without being limited thereto. For example, as shown in Fig. 1, a great quantity of food can be prepared in a rectangular shape using the mold for food including at least one rectangular recess formed therein.

In one embodiment, the mold for food according to the present invention may have a saturation magnetization of 1 emu/g or more, for example, from 1 emu/g to 10 emu/g, as measured on a specimen having a size of 4 mm × 4 mm × 2.5 mm. Within this range, a specimen (fragment) of the mold for food having a size of a few millimeters or less can be detected by a magnetic detector.

The mold for food may have an Izod impact strength from 50 kgf·cm/cm or more to 90 kgf·cm/cm or less, for example, from 55 kgf·cm/cm or more to 80 kgf·cm/cm or less, as measured on an 1/8" (3.175mm) thick specimen in accordance with ASTM D256.

The mold for food may have a Vicat softening temperature (VST) from 130°C or more to 150°C or less, for example, from 135°C to 145°C.

In addition, the mold for food may have a melt flow index (MI) from 5 g/lOmin or more to 15 g/lOmin or less, for example, from 7 g/lOmin or more to 11 g/lOmin or less,as measured at 220°C under a load of 10 kgf in accordance with ASTM D1238.

Since the mold for food according to the present invention exhibits excellent impact resistance, processability, heat resistance and the like, and can response to magnetism, the mold for food is particularly useful for chocolate molds and the like, which require detection and removal of mold fragments (pieces) from products (foods).

Hereinafter, the present invention will be described in more detail with reference to some examples. It should be understood that these examples are provided for illustration only and are not to be construed in any way as limiting the present invention.

### EXAMPLES

Details of components used in Examples and Comparative Examples are as follows:
(A) Thermoplastic resin
   A polycarbonate resin (model: INFINO, Cheil Industries Inc.) was used.
(B) Magnetic material
   Magnetite (Fe₃O₄, model: Bayoxide, Lanxess Co., Ltd. (Germany)) was used.
(C) Impact modifier
   Methylmethacrylate-butadiene-styrene (MBS, model: METABLEN C-223A, KUREHACHIM Co., Ltd.) was used.

### Examples 1 to 3 and Comparative Examples 1 to 2

The components were added in amounts as listed in Table 1, respectively, followed by melting, kneading and extrusion, thereby preparing pellets. Here, extrusion was performed using a twin-screw extruder having L/D=32 and a diameter of 30 mm. The prepared pellets were dried at 80°C for 6 hours, followed by injection molding in a 85.05g (3 oz) injection machine at 270°C, thereby preparing a specimen of a mold for food (4 mm×4 mm×2.5 mm). Each of the prepared specimens was evaluated as to the following properties. Results are shown in Table 1.

### Evaluation of properties

(1) Izod impact strength (unit: kgf·cm/cm): Izod impact strength was measured on a 1/8" (3.175mm) thick notched Izod specimen in accordance with ASTM D256.
(2) Melt flow index (MI, unit: g/10min): Melt flow index was measured at 220°C under a load of 10 kgf in accordance with ASTM D1238.
(3) Magnetic intensity (unit: emu/g): Magnetic intensity was measured using a Vibrating Sample Magnetometer (VSM, LakeShore Co., Ltd.), in which measurement was performed by recording applied magnetic field by a Hall probe (range: -5000∼5,000 0e), followed by measuring magnetization (unit: emu) of a specimen for the applied magnetic field by recording electromotive force obtained by Faraday's law when vibration is applied to the specimen. Among the magnetizations, the highest magnetization was divided by a weight of the specimen, thereby obtaining magnetic intensity (Ms, unit; emu/g).

**Table 1**

| | Example | | | Comparative Example | |
|---|---|---|---|---|---|
| | 1 | 2 | 3 | 1 | 2 |
| (A) (parts by weight) | 100 | 100 | 100 | 100 | 100 |
| (B) (parts by weight) | 5 | 5 | 7 | - | 5 |
| (C) (parts by weight) | 1.0 | 1.5 | 1.0 | - | - |
| Izod impact strength | 79.71 | 79.76 | 59.11 | 10 | 8.45 |
| Melt flow index | 7.50 | 7.10 | 8.10 | 8.0 | 10.10 |
| Saturation magnetization | 1.1978 | 1.1978 | 1.6599 | 0.0046 | 1.1978 |

From the results of Table 1, it can be seen that the molds for food according to the present invention (molds for food prepared in Examples 1 to 3) exhibited excellent impact resistance and melt flow index (processability). In addition, it can be seen that, since the molds for food according to the present invention has a saturation magnetization of 1 emu/g or more, even small fragments of the molds having a size of a few millimeters or less can be detected by a magnetism tester.

Conversely, it could be seen that the mold for food of Comparative Example 1 not containing a magnetic material and an impact modifier was not suitable as a mold for food due to low impact strength thereof, and that it was difficult to detect fragments thereof having a size of a few millimeters or less using a magnetism tester due to low saturation magnetization thereof. In addition, it could be seen that the mold for food of Comparative Example 2 was not suitable as a mold for food due to low impact strength thereof.

## Claims

1. A mold for food, comprising:
a thermoplastic resin;
a magnetic material; and
an impact modifier.
wherein the impact modifier comprises at least one of a core-shell graft impact modifier and a branched graft impact modifier.

2. The mold for food according to claim 1, wherein the thermoplastic resin comprises at least one of polycarbonate resins, aromatic vinyl resins, polyester resins, polyphenylene ether resins, polyamide resins, and polyolefin resins.

3. The mold for food according to claim 1, wherein the magnetic material comprises at least one of strontium-ferrite (Sr-Fe₁₂O₁₉), barium-ferrite (Ba-Fe₁₂O₁₉), magnetite (Fe₃O₄), maghemite (γ-Fe₂O₃), nickel-ferrite (Ni-Fe₂O₄), and cobalt-ferrite (Co-Fe₂O₄).

4. The mold for food according to claim 1, wherein the magnetic material has a saturation magnetization of 40 emu/g or more.

5. The mold for food according to claim 1, wherein the core-shell graft impact modifier is prepared by grafting an aromatic vinyl monomer and at least one monomer copolymerizable with the aromatic vinyl monomer to a rubbery polymer core.

6. The mold for food according to claim 1, wherein the branched graft impact modifier comprises at least one of methyl methacrylate-butadiene-styrene (MBS), styrene-butadiene-styrene (SBS), styrene-butadiene rubber (SBR), ethylene-propylene rubber (EPM, EPR), ethylene-propylene-diene monomer (EPDM) terpolymer, maleic anhydride-grafted EPR (EPR-g-MA), maleic anhydride-grafted SBS (SBS-g-MA), maleic anhydride-grafted EPDM (EPDM-g-MA), ethylene methyl acrylate (EMA), ethylene ethyl acrylate (EEA), ethylene vinyl alcohol (EVOH), thermoplastic elastomers, and thermoplastic plastomers.

7. The mold for food according to claim 1, wherein the mold for food comprises: 100 parts by weight of the thermoplastic resin; 3 parts or more by weight to 20 parts or less by weight of the magnetic material; and 1.5 parts or more by weight to 10 parts or less by weight of the impact modifier.

8. The mold for food according to claim 1, wherein the mold for food has a saturation magnetization of 1 emu/g or more, as measured on a specimen having a size of 4 mm × 4 mm × 2.5 mm.

9. The mold for food according to claim 1, wherein the mold for food has an Izod impact strength from 50 kgf·cm/cm or more to 90 kgf·cm/cm or less, as measured on an 1/8" thick specimen in accordance with ASTM D256.

10. The mold for food according to claim 1, wherein the mold for food has a melt flow index (MI) from 5 g/10min or more to 15 g/10min or less, as measured at 220°C under a load of 10 kgf in accordance with ASTM D1238.

11. The mold for food according to claim 1, wherein the mold for food comprises: a recess and a frame surrounding the recess.

12. The mold for food according to claim 11, wherein the frame has a width and a length which each independently range from 10 cm or more to 200 cm or less, and the recess has a thickness from 2 cm or more to 50 cm or less.

## Patentansprüche

1. Form für Lebensmittel, mit:
einem thermoplastischen Harz;
einem magnetischen Material; und
einem Schlagzähmodifizierer,
wobei der Schlagzähmodifizierer einen gepfropften Kern-Schale-Schlagzähmodifizierer und/oder einen verzweigten gepfropften Schlagzähmodifizierer aufweist.

2. Form nach Anspruch 1, wobei das thermoplastische Harz mindestens eine Komponente ausgewählt aus Polycarbonatharzen, aromatischen Vinylharzen, Polyesterharzen, Polyphenylenetherharzen, Polyamidharzen und Polyolefinharzen aufweist.

3. Form nach Anspruch 1, wobei das magnetische Material mindestens eine Komponente ausgewählt aus Strontiumferrit (Sr-Fe₁₂O₁₉), Bariumferrit (Ba-Fe₁₂O₁₉), Magnetit (Fe₃O₄), Maghemit (γ-Fe₂O₃), Nickel-Ferrit (Ni-Fe₂O₄) und Kobalt-Ferrit (Co-Fe₂O₄) aufweist.

4. Form nach Anspruch 1, wobei das magnetische Material eine Sättigungsmagnetisierung von 40 emu/g oder mehr aufweist.

5. Form nach Anspruch 1, wobei der gepfropfte Kern-Schale-Schlagzähmodifizierer durch Pfropfen eines aromatischen Vinylmonomers und mindestens eines mit dem aromatischen Vinylmonomer copolymerisierbaren Monomers auf einen kautschukartigen Polymerkern hergestellt wird.

6. Form nach Anspruch 1, wobei der verzweigte gepfropfte Schlagzähigkeitsmodifizierer mindestens eine Komponente unter Methylmethacrylat-Butadien-Styrol (MBS), Styrol-Butadien-Styrol (SBS), Styrol-Butadien-Kautschuk (SBR), Ethylen-Propylen-Kautschuk (EPM, EPR), Ethylen-Propylen-Dien-Monomer- (EPDM) Terpolymer, Maleinsäureanhydrid-gepfropftem EPR (EPR-g-MA), Maleinsäureanhydrid-gepfropftem SBS (SBS-g-MA), Maleinsäureanhydrid-gepfropftem EPDM (EPDM-g-MA), Ethylenmethylacrylat (EMA), Ethylenethylacrylat (EEA), Ethylenvinylalkohol (EVOH), thermoplastischen Elastomeren und thermoplastischen Plastomeren aufweist.

7. Form nach Anspruch 1, wobei die Form für Lebensmittel aufweist: 100 Gewichtsteile des thermoplastischen Harzes, 3 Gewichtsteile oder mehr bis 20 Gewichtsteile oder weniger des magnetischen Materials und 1,5 Gewichtsteile oder mehr bis 10 Gewichtsteile oder weniger des Schlagzähigkeitsmodifizierers.

8. Form nach Anspruch 1, wobei die Form für Lebensmittel eine Sättigungsmagnetisierung von 1 emu/g oder mehr aufweist, gemessen für eine Probe mit einer Größe von 4 mm × 4 mm × 2,5 mm.

9. Form nach Anspruch 1, wobei die Form für Lebensmittel eine Izod-Schlagzähigkeit von 50 kgf·cm/cm oder mehr bis 90 kgf·cm/cm oder weniger aufweist, gemessen für eine 1/8" dicke Probe gemäß ASTM D256.

10. Form nach Anspruch 1, wobei die Form für Lebensmittel einen Schmelzflussindex (MI) von 5 g/10 min oder mehr bis 15 g/10 min oder weniger, gemessen bei 220°C unter einer Belastung von 10 kgf gemäß ASTM D1238 aufweist.

11. Form nach Anspruch 1, wobei die Form für Lebensmittel eine Vertiefung und einen die Vertiefung umgebenden Rahmen aufweist.

12. Form nach Anspruch 11, wobei der Rahmen eine Breite und eine Länge aufweist, die jeweils unabhängig voneinander im Bereich von 10 cm oder mehr bis 200 cm oder weniger liegen, und wobei die Vertiefung eine Dicke von 2 cm oder mehr bis 50 cm oder weniger aufweist.

## Revendications

1. Moule pour aliments, comprenant :
une résine thermoplastique ;
un matériau magnétique ; et
un modificateur d'impact ;
dans lequel le modificateur d'impact comprend au moins l'un modificateur d'impact greffé à structure coeur-coquille et d'un modificateur d'impact greffé ramifié.

2. Moule pour aliments selon la revendication 1, dans lequel la résine thermoplastique comprend au moins l'une de résines polycarbonate, de résines vinyle aromatique, de résines polyester, de résines éther de polyphénylène, de résines polyamide, et de résines polyoléfiniques.

3. Moule pour aliments selon la revendication 1, dans lequel le matériau magnétique comprend au moins l'un de strontium-ferrite (Sr-Fe₁₂O₁₉), baryum-ferrite (Ba-Fe₁₂O₁₉), magnétite (Fe₃O₄), maghémite (γ-Fe₂O₃), nickel-ferrite (Ni-Fe₂O₄), et cobalt-ferrite (Co-Fe₂O₄).

4. Moule pour aliments selon la revendication 1, dans lequel le matériau magnétique a une magnétisation de saturation de 40 UEM/g ou plus.

5. Moule pour aliments selon la revendication 1, dans lequel le modificateur d'impact greffé à structure coeur-coquille est préparé par greffage d'un monomère vinyle aromatique et d'au moins un monomère copolymérisable avec le monomère de vinyle aromatique à un noyau polymère caoutchouteux.

6. Moule pour aliments selon la revendication 1, dans lequel le modificateur d'impact greffé ramifié comprend au moins l'un des méthacrylate de méthyle-butadiène-styrène (MBS), styrène-butadiène-styrène (SBS), caoutchouc styrène-butadiène (SBR), caoutchouc éthylène-propylène (EPM, EPR), terpolymère monomère éthylène-propylène-diène (EPDM), EPR greffé avec de l'anhydride maléique (EPR-g-MA), SBS greffé avec de l'anhydride maléique (SBS-g-MA), EPDM greffé avec de l'anhydride maléique (EPDM-g-MA), éthylène acrylate de méthyle (EMA), éthylène acrylate d'éthyle (EEA), éthylène alcool vinylique (EVOH), élastomères thermoplastique, et plastomères thermoplastiques.

7. Moule pour aliments selon la revendication 1, dans lequel le moule pour aliments comprend : 100 parties en poids de la résine thermoplastique ; de 3 parties ou plus en poids à 20 parties ou moins en poids du matériau magnétique ; et de 1,5 partie ou plus en poids à 10 parties ou moins en poids du modificateur d'impact.

8. Moule pour aliments selon la revendication 1, dans lequel le moule pour aliments a une magnétisation de saturation de 1 UEM/g ou moins, telle que mesurée sur un spécimen ayant une taille de 4 mm x 4 mm x 2,5 mm.

9. Moule pour aliments selon la revendication 1, dans lequel le moule pour aliments a une résistance à l'impact Izod de 50 kgf.cm/cm ou plus à 90 kgf.cm/cm ou moins, telle que mesurée sur un spécimen d'une épaisseur de 1/8" conformément à ASTM D256.

10. Moule pour aliments selon la revendication 1, dans lequel le moule pour aliments a un indice de fluidité (MI) de 5 g/10 min ou plus à 15 g/10 min ou moins, tel que mesuré à 220 °C sous une charge de 10 kgf conformément à ASTM D1238.

11. Moule pour aliments selon la revendication 1, dans lequel le moule pour aliments comprend : une cavité et un châssis entourant la cavité.

12. Moule pour aliments selon la revendication 11, dans lequel le châssis a une largeur et une longueur qui se trouvent indépendamment dans la plage de 10 cm ou plus à 200 cm ou moins, et la cavité a une épaisseur de 2 cm ou plus à 50 cm ou moins.
